(19) Europäisches Patentamt
European Patent Office
Office européen des brevets

(11) Veröffentlichungsnummer: **0 298 469 B1**

(12) **EUROPÄISCHE PATENTSCHRIFT**

(45) Veröffentlichungstag der Patentschrift: **16.09.92**

(51) Int. Cl.$^5$: **C03C 10/00**, C03C 11/00, C03C 1/00

(21) Anmeldenummer: **88110847.6**

(22) Anmeldetag: **07.07.88**

# (54) Verfahren zur Herstellung hochporöser Glaskeramikformteile.

(30) Priorität: **08.07.87 DE 3722597**

(43) Veröffentlichungstag der Anmeldung:
**11.01.89 Patentblatt 89/02**

(45) Bekanntmachung des Hinweises auf die Patenterteilung:
**16.09.92 Patentblatt 92/38**

(84) Benannte Vertragsstaaten:
**AT BE CH DE FR GB IT LI NL SE**

(56) Entgegenhaltungen:
**FR-A- 1 081 726**

**CERAMIC ENGINEERING AND SCIENCE PROCEEDINGS, Band 4, Nrs. 9/10. September-Okfober 1983, Seiten 704-717, Columbus, Ohio, US; F.K. CHI: "Carbon-containing monolithic glasses via the sol-gel process"**

**JOURNAL OF NON-CRYSTALLINE SOLIDS, Band 82, Nrs. 1/3, Juni 1986, Seiten 24-30, Elsevier Science Publishers B.V., Amsterdam, NL; S. SAKKA et al.: "Hydrolysis and polycondensation of dimethyldiethoxysilane and methyltriethoxysilane as materials for the sol-gel process"**

(73) Patentinhaber: **WACKER-CHEMIE GMBH**
**Hanns-Seidel-Platz 4**
**W-8000 München 83(DE)**

(72) Erfinder: **Frey, Volker, Dr., Dipl.-Chem.**
**Jahnweg 5**
**W-8263 Burghausen(DE)**
Erfinder: **Pachaly, Bernd, Dr., Dipl.-Chem.**
**Robert-Koch-Strasse 167**
**W-8263 Burghausen(DE)**
Erfinder: **Zeller, Norbert, Dr., Dipl.-Chem.**
**Schweitzer Strasse 5**
**W-8263 Burghausen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

In der EP-A-107943 sind kohlenstoffhaltige monolithische Gläser beschrieben, die aus Gelen von Organosilsesquioxanen der allgemeinen Formel $RSiO_{3/2}$ erhalten wurden. Defektfreie Formteile sind wegen der geringen Porosität dieser Gele nur durch aufwendige Trocknungsprozeduren erreichbar, wobei auch dann die Reproduzierbarkeit der Maße der Formteile nicht gegeben ist.

Es bestand die Aufgabe ein Verfahren zur Herstellung hochporöser, defektfreier Glaskeramikformteile, die an Siliciumatome gebundene Kohlenstoffatome enthalten, mit reproduzierbaren Maßen und hoher Porosität bereitzustellen unter Vermeidung von aufwendigen Trocknungs- und Verarbeitungsprozessen.

Gelöst wird diese Aufgabe durch ein Verfahren zur Herstellung hochporöser Glaskeramikformteile, die an Siliciumatome gebundene Kohlenstoffatome enthalten, das dadurch gekennzeichnet ist, daß ein Formteil, bestehend aus einem bei Raumtemperatur festen Organopolysiloxan aus Einheiten der Formel

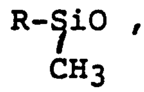

wobei R ein über eine Silicium-Silicium-Einfachbindung gebundener Rest der Formeln

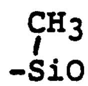 oder

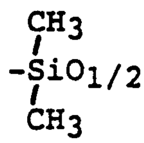

ist, unter nichtoxidierender Atmosphäre oder im Vakuum bei Temperaturen im Bereich von 700 bis 1300 °C umgesetzt wird.

Der bevorzugte Temperaturbereich beim erfindungsgemäßen Verfahren liegt innerhalb der Grenzen von 900 bis 1100 °C. Beim erfindungsgemäßen Verfahren tritt in Abhängigkeit von der gewählten Zusammensetzung des Formteils, bestehend aus einem bei Raumtemperatur festen Organopolysiloxan, ein reproduzierbarer Volumenschrumpf von 40 bis 55 % auf, was für die Herstellung von Formteilen mit reproduzierbaren Maßen entscheidende Bedeutung hat. Der Gewichtsverlust beträgt 15 bis 20 %.

Die Umsetzung wird unter nichtoxidierender Atmosphäre, das heißt unter inerter Atmosphäre wie Stickstoff oder Argon oder unter reduzierender Atmosphäre wie Kohlenmonoxid oder Wasserstoff, oder im Vakuum durchgeführt. Das Aufheizprogramm muß der jeweiligen Problemstellung angepaßt werden und hängt im wesentlichen von Lösungsmittelrestgehalt, sowie Größe und Form des Formteils ab.

Die erfindungsgemäß verwendeten Formteile, bestehend aus einem bei Raumtemperatur festen Organopolysiloxan aus Einheiten der Formel

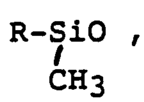

wobei R ein über eine Silicium-Silicium-Einfachbindung gebundener Rest der Formeln

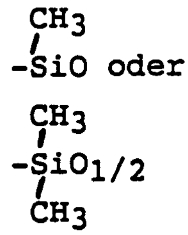

ist, werden vorzugsweise durch ein Sol-Gel-Verfahren erhalten, wobei ein Disilan der allgemeinen Formel

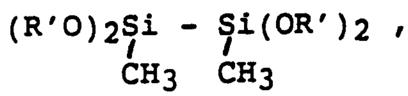

worin R′ jeweils unabhängig voneinander Methyl-, Ethyl- oder Isopropylrest bedeutet, gegebenenfalls im Gemisch mit einem Disilan der allgemeinen Formel

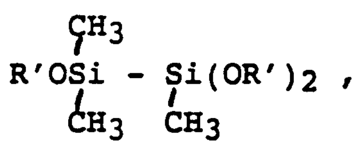

worin R′ die oben dafür angegebene Bedeutung hat, in einem formgebenden Behälter mit Wasser gegebenenfalls in Gegenwart von Alkohol umgesetzt wird und nachfolgend Ammoniak zugesetzt wird.

Die formgebenden Behälter können Körper jeglicher Art wiedergeben, beispielsweise Zylinder oder Quader. Bevorzugte Volumen dieser Körper liegen im Bereich von 1 bis 500 $cm^3$. Bevorzugte Materialien für die formgebenden Behälter sind Teflon, Polyethylen, Glas oder Aluminium.

Bevorzugte Parameter bei der Herstellung der Formteile, bestehend aus einem bei Raumtemperatur festen Organopolysiloxan aus Einheiten der Formel

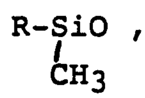

wobei R ein über eine Silicium-Silicium-Einfachbindung gebundener Rest der Formeln

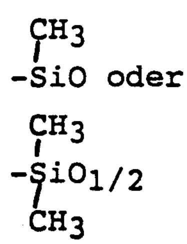

ist, sind:

Zusammensetzung:

0-40 Gew.-%, insbesondere 15-30 Gew.-% Alkohol

20-50 Gew.-%, insbesondere 25-40 Gew.-% Wasser und

40-60 Gew.-%, insbesondere 43-52 Gew.-% Disilane.

Temperatur:

10-50 ° C, insbesondere 15-30 ° C.

Sehr gute Ergebnisse wurden mit 22 Gew.-% Alkohol, 33 Gew.-% Wasser und 45 Gew.-% Disilan erhalten.

Disilane der allgemeinen Formeln

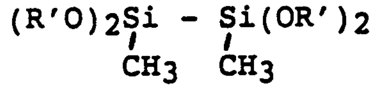 ,

worin R' jeweils unabhängig voneinander Methyl-, Ethyl- oder Isopropylrest bedeutet und

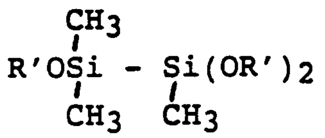 ,

worin R' die oben dafür angegebene Bedeutung hat, sind bekannte Verbindungen und nach Hengge et al., Monatshefte für Chemie, 105, 671-683 (1984) oder W.H. Atwell et al., Journal of Organometallic Chemistry, 7, 71-78 (1967) leicht zugänglich. Bevorzugte Disilane sind 1,2-Dimethyltetramethoxydisilan und 1,1,2-Trimethyltrimethoxydisilan.

Bevorzugte Beispiele für eingesetzte Alkohle sind Methanol, Ethanol und Isopropanol.

Die erfindungsgemäß verwendeten Formteile, bestehend aus einem bei Raumtemperatur festen Organopolysiloxan aus Einheiten der Formel

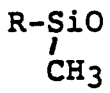 ,

wobei R ein über eine Silicium-Silicium-Einfachbindung gebundener Rest der Formeln

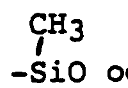 oder

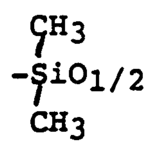

ist, werden vorzugsweise durch ein Sol-Gel-Verfahren erhalten, wobei ein Disilan der allgemeinen Formel

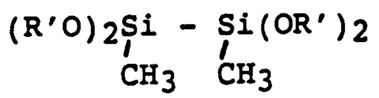 ,

worin R' jeweils unabhängig voneinander Methyl-, Ethyl- oder Isopropylrest bedeutet, gegebenenfalls im Gemisch mit einem Disilan der allgemeinen Formel

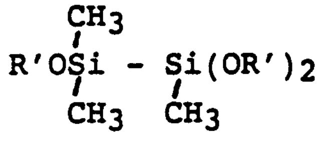 ,

worin R' die oben dafür angegebene Bedeutung hat, in einem formgebenden Behälter mit Wasser gegebenenfalls in Gegenwart von Alkohol umgesetzt wird und nachfolgend Ammoniak zugesetzt wird bis ein pH-Wert im Bereich von 6,0 bis 6,5 erreicht ist.

Die Einstellung des pH-Wertes erfolgt durch Zugabe von Ammoniak. Dies kann beispielsweise durch

Zugabe von wäßrigem Ammoniak, durch Einleiten von gasförmigem Ammoniak oder durch Zugabe von bei Erwärmung Ammoniak abspaltenden Substanzen wie Urotropin, Harnstoff oder basischen Ammonsalzen (z.B. $(NH_4)_2CO_3$) erfolgen.

Nach dem Gelieren kann das Formteil, bestehend aus einem bei Raumtemperatur festen Organopolysiloxan aus Einheiten der Formel

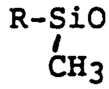 ,

wobei R ein über eine Silicium-Silicium-Einfachbindung gebundener Rest der Formeln

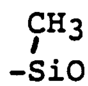 oder

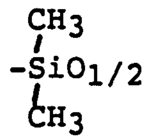

ist, aus dem formgebenden Behälter entnommen werden und an Luft bei Temperaturen von vorzugsweise 20 bis 150 °C, insbesondere 25 bis 100 °C getrocknet werden. Hierbei tritt in Abhängigkeit von der gewählten Zusammensetzung des Formteils ein reproduzierbarer Schrumpf auf, was für die Herstellung von Formteilen mit reproduzierbaren Maßen entscheidende Bedeutung hat.

Die nach dem erfindungsgemäßen Verfahren hergestellten hochporösen Glaskeramikformteile, die an Siliciumatome gebundene Kohlenstoffatome enthalten, weisen eine Dichte von 0,7-0,8g/$cm^3$ bei einer Porosität von 60-70% auf. Sie sind nicht elektrisch leitfähig und zeigen eine gute Temperaturwechselbeständigkeit bis 1000 °C. Ihre Temperaturbeständigkeit an Luft ist bis zu einer Temperatur von 1300 °C gewährleistet.

Die nach dem erfindungsgemäßen Verfahren hergestellten Glaskeramikformteile finden Verwendung zur thermischen Isolierung und zur Filtration, vorzugsweise bei hohen Temperaturen oder hohen Drücken.

Beispiel 1-4:

Ein aus Wasser, Methanol und 1,2-Dimethyltetramethoxydisilan hergestelltes Sol wurde so lange mit konzentrierter Ammoniaklösung versetzt, bis der Anfangs-pH-Wert von 4,8 aus 6,0 gestiegen war (s.Tabelle 1). Das Sol wurde dann in eine zylindrische Glasform mit Innendurchmesser 30mm und 100mm Höhe gegossen. Nach 10-15min war das Sol zu einem hochporösen Gel geliert. Nach weiteren 10 Minuten wurde das Gel aus der Form entnommen und 24h luftgetrocknet. Tabelle 1 zeigt Dichte d (g/$cm^3$) und Durchmesserschwund D (% gegenüber dem Durchmesser der Form) der getrockneten Formteile.

Tabelle 1

| Beispiel | Gew.-% $H_2O$ | Gew.-% MeOH | Gew.-% Disilan | pH | d | D |
|---|---|---|---|---|---|---|
| 1 | 26 | 23 | 51 | 6,0 | 0,53 | 18,5 |
| 2 | 34 | 21 | 45 | 6,0 | 0,49 | 14,7 |
| 3 | 33 | 22 | 45 | 6,0 | 0,37 | 11,1 |
| 4 | 32 | 26 | 42 | 6,0 | 0,34 | 11,1 |

Beispiel 5:

Ein aus 72,5g (8mol) Wasser, 48,0g (3mol) Methanol und 105g (0,5mol) 1,2-Dimethyltetramethoxydisilan hergestelltes Sol wurde so lange mit konzentrierter Ammoniaklösung versetzt, bis der sich anfangs einstellende pH-Wert von 4,8 auf 6,0 gestiegen war. Das Sol wurde nun in eine kachelförmige Polyethylenform mit Innenmaßen 100x100x30mm gegossen. Nach 10min bei 25°C gelierte das Sol zu einem hochporösem Gel, das die gesamte Form ausfüllte. Nach weiteren 10min wurde das Formteil aus der Form genommen und 24h bei 25°C luftgetrocknet. Das resultierende Formteil wies eine Dichte von 0,38g/cm$^3$ auf, die Kantenlänge war um 11% geschrumpft.

Beispiel 6-8:

Die gemäß Beispiel 2, 3 und 4 hergestellten Testkörper wurden in einem Kammerofen mit Argonspülung auf 1000°C aufgeheizt und 60min bei dieser Temperatur belassen. Tabelle 2 zeigt die Massenverluste in % und die Dichten in g/cm$^3$.

Tabelle 2

| Beispiel | Massenverlust | Dichte | Testkörper aus Beispiel |
|---|---|---|---|
| 6 | 17,1 | 0,74 | 2 |
| 7 | 17,2 | 0,79 | 3 |
| 8 | 17,3 | 0,70 | 4 |

Beispiel 9:

Eine gemäß Beispiel 5 hergestellte Trockengel-Kachel wurde in einem Kammerofen unter Argonspülung auf 1000°C aufgeheizt und 60min bei dieser Temperatur belassen. Nach dem Abkühlen erhielt man eine schwarze, poröse Kachel die gegenüber dem Trockengel um 17,3% an Gewicht und um 45,9% an Volumen verloren hatte. Das Material wies eine Dichte von 0,75g/cm$^3$ bei einer Porosität von 66,8% auf. Die Porositäts-Bestimmung durch Hg-Porosimetrie ergab eine sehr enge Porengrößenverteilung mit einem Maximum bei 4 micrometer. Die Oberfläche nach BET-Methode betrug 1,5m$^2$/g.

Beispiel 10

Eine gemäß Beispiel 9 hergestellte hochporöse, kohlenstoffhaltige Glaskeramik-Kachel wurde in einem Kammerofen unter Luftatmosphäre auf 1300°C aufgeheizt und 10h bei dieser Temperatur belassen. Nach Abkühlung zeigte sich keine Gewichtsveränderung.
Des weiteren wurde diese Kachel in einem Kammerofen auf 1000°C aufgeheizt und rasch in ein Wasserbad mit einer Temperatur von 25°C getaucht. Auch nach zehnmaliger Wiederholung dieses Vorgangs trat keine Beschädigung der Kachel auf.

## Patentansprüche

1. Verfahren zur Herstellung hochporöser Glaskeramikformteile, die an Siliciumatome gebundene Kohlenstoffatome enthalten, dadurch gekennzeichnet, daß ein Formteil, bestehend aus einem bei Raumtemperatur festen Organopolysiloxan aus Einheiten der Formel

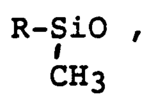

wobei R ein über eine Silicium-Silicium-Einfachbindung gebundener Rest der Formeln

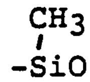 oder

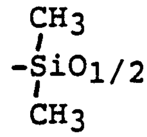

ist, unter nichtoxidierender Atmosphäre oder im Vakuum bei Temperaturen im Bereich von 700 bis 1300 °C umgesetzt wird.

**2.** Verfahren nach Anspruch 1, dadurch gekennzeichnet, daß das Formteil, bestehend aus einem bei Raumtemperatur festen Organopolysiloxan aus Einheiten der Formel

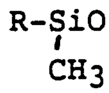 ,

wobei R ein über eine Silicium-Silicium-Einfachbindung gebundener Rest der Formeln

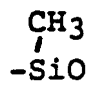 oder

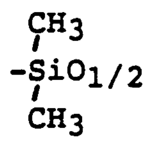

ist, durch ein Sol-Gel-Verfahren erhalten wird.

**3.** Verfahren nach Anspruch 2, dadurch gekennzeichnet, daß das Formteil, bestehend aus einem bei Raumtemperatur festen Organopolysiloxan aus Einheiten der Formel

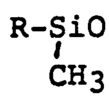 ,

wobei R ein über eine Silicium-Silicium-Einfachbindung gebundener Rest der Formeln

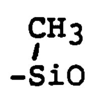 oder

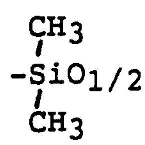

ist, durch ein Sol-Gel-Verfahren erhalten wird, wobei ein Disilan der allgemeinen Formel

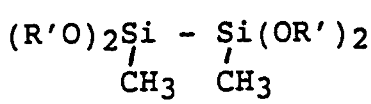 ,

worin R' jeweils unabhängig voneinander Methyl-, Ethyl-oder Isopropylrest bedeutet, gegebenenfalls im Gemisch mit einem Disilan der allgemeinen Formel

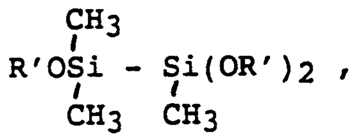

worin R' die oben dafür angegebene Bedeutung hat, in einem formgebenden Behälter mit Wasser gegebenenfalls in Gegenwart von Alkohol umgesetzt wird und nachfolgend Ammoniak zugesetzt wird.

4. Verfahren nach Anspruch 3, dadurch gekennzeichnet, daß als Disilan 1,2-Dimethyltetramethoxydisilan gegebenenfalls im Gemisch mit 1,1,2-Trimethyltrimethoxydisilan eingesetzt wird.

5. Verfahren nach Anspruch 3 oder 4, dadurch gekennzeichnet, daß 0-40 Gew.-% Alkohol, 20-50 Gew.-% Wasser und 40-60 Gew.-% Disilan eingesetzt werden.

6. Verfahren nach einem der Ansprüche 3 bis 5, dadurch gekennzeichnet, daß Ammoniak zugesetzt wird bis ein pH-Wert im Bereich von 6,0 bis 6,5 erreicht ist.

**Claims**

1. Process for the production of highly porous glass-ceramic moulded parts containing carbon atoms attached to silicon atoms, characterised in that a moulded part consisting of an organopolysiloxane, solid at room temperature, made up of units of the formula

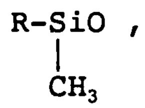

where R is a radical of the formulae

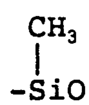

or

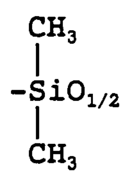

attached via a single silicon-silicon bond, is reacted in a non-oxidising atmosphere or in vacuo at temperatures ranging from 700 to 1300 ° C.

2. Process according to Claim 1, characterised in that the moulded part consisting of an organopolysiloxane, solid at room temperature, made up of units of the formula

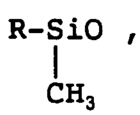

where R is a radical of the formulae

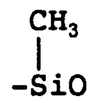

or

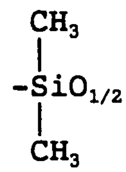

attached via a single silicon-silicon bond, is obtained by a sol-gel process.

**3.** Process according to Claim 2, characterised in that the moulded part consisting of an organopolysiloxane, solid at room temperature, made up of units of the formula

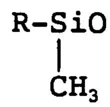

,

where R is a radical of the formulae

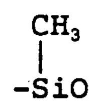

or

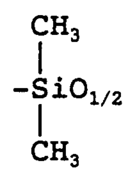

attached via a single silicon-silicon bond, is obtained by a sol-gel process, where a disilane of the general formula

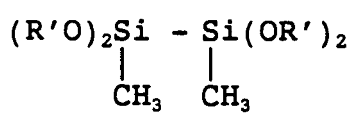

,

in which each R' independently of one another denotes a methyl, ethyl or isopropyl radical, optionally in admixture with a disilane of the general formula

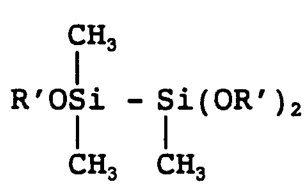

,

in which R' has the meaning defined above, is reacted with water, optionally in the presence of alcohol, in a mould, followed by the addition of ammonia.

4. Process according to Claim 3, characterised in that 1,2-dimethyltetramethoxydisilane, optionally in admixture with 1,1,2-trimethyltrimethoxydisilane, is used as disilane.

5. Process according to Claim 3 or 4, characterised in that 0-40% by weight of alcohol, 20-50% by weight of water and 40-60% by weight of disilane are used.

6. Process according to one of Claims 3 to 5, characterised in that ammonia is added until a pH in the range from 6.0 to 6.5 is reached.

**Revendications**

1. Procédé pour fabriquer des objets moulés très poreux en vitrocéramique qui contiennent des atomes de carbone liés à des atomes de silicium, procédé caractérisé en ce qu'on fait réagir un objet moulé en un polyorganosiloxane solide à la température ambiante qui est constitué de motifs répondant à la formule :

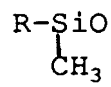

dans laquelle R représente un radical répondant à l'une des formules :

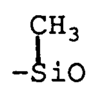

et

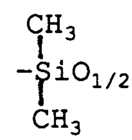

relié par une liaison silicium-silicium simple, dans une atmosphère non oxydante ou sous pression réduite, à des températures comprises entre 700 et 1300 ° C.

2. Procédé selon la revendication 1 caractérisé en ce que l'objet moulé en un polyorganosiloxane solide à la température ambiante qui est constitué de motifs répondant à la formule :

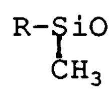

dans laquelle R représente un radical répondant à l'une des formules :

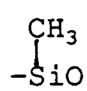

et

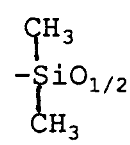

relié par une liaison silicium-silicium simple, est obtenu par un procédé sol-gel.

3. Procédé selon la revendication 2 caractérisé en ce que l'objet moulé en un polyorganosiloxane solide à la température ambiante qui est constitué de motifs répondant à la formule :

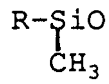

dans laquelle R représente un radical répondant à l'une des formules :

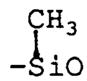

et

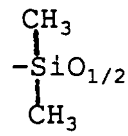

relié par une liaison silicium-silicium simple, est obtenu par un procédé sol-gel selon lequel on fait réagir avec de l'eau, éventuellement en présence d'un alcool, un disilane répondant à la formule générale :

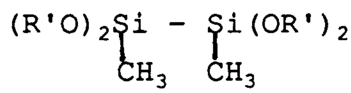

dans laquelle les R' représentent chacun, indépendamment les uns des autres, un radical méthyle, éthyle ou isopropyle, éventuellement en mélange avec un disilane répondant à la formule générale :

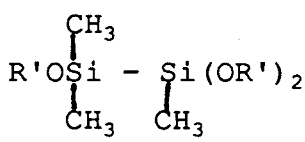

dans laquelle les R' ont les significations qui leur ont été doneées ci-dessus, dans un récipient donnant une forme, puis on ajoute de l'ammoniac.

**4.** Procédé selon la revendication 3 caractérisé en ce qu'on utilise, comme disilane, du 1,2-diméthyltétraméthoxy-disilane, éventuellement en mélange avec du 1,1,2-triméthyl-triméthoxy-disilane.

**5.** Procédé selon l'une des revendications 3 et 4 caractérisé en ce qu'on utilise de 0 à 40 % en poids d'un alcool, de 20 à 50 % en poids d'eau et de 40 à 60 % en poids d'un disilane.

**6.** Procédé selon l'une quelconque des revendications 3 à 5, caratérisé en ce qu'on ajoute de l'ammoniac jusqu'à ce que le pH soit compris entre 6,0 et 6,5.